(19) Europäisches Patentamt
European Patent Office
Office européen des brevets

(11) **EP 2 718 740 B1**

(12) **EUROPÄISCHE PATENTSCHRIFT**

(45) Veröffentlichungstag und Bekanntmachung des Hinweises auf die Patenterteilung:
**19.07.2017 Patentblatt 2017/29**

(51) Int Cl.:
*G01S 7/41* (2006.01)      *G01S 13/89* (2006.01)
*G01S 13/88* (2006.01)     *G01V 8/00* (2006.01)

(21) Anmeldenummer: **11784969.5**

(22) Anmeldetag: **04.11.2011**

(86) Internationale Anmeldenummer:
**PCT/EP2011/069454**

(87) Internationale Veröffentlichungsnummer:
**WO 2012/167847 (13.12.2012 Gazette 2012/50)**

(54) **VERFAHREN UND VORRICHTUNG ZUR ERWEITERUNG DER AUSLEUCHTUNG EINES PRÜFOBJEKTS**

METHOD AND DEVICE FOR EXPANDING THE ILLUMINATION OF A TEST OBJECT

PROCÉDÉ ET DISPOSITIF POUR ÉLARGIR L'ÉCLAIRAGE D'UN OBJET À CONTRÔLER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2011 DE 102011103643**
**01.07.2011 DE 102011078539**

(43) Veröffentlichungstag der Anmeldung:
**16.04.2014 Patentblatt 2014/16**

(73) Patentinhaber: **Rohde & Schwarz GmbH & Co. KG**
**81671 München (DE)**

(72) Erfinder:
• **AHMED, Sherif**
**81737 München (DE)**
• **EVERS, Christian**
**85551 Kirchheim (DE)**

(74) Vertreter: **Körfer, Thomas**
**Mitscherlich PartmbB**
**Patent- und Rechtsanwälte**
**Sonnenstrasse 33**
**80331 München (DE)**

(56) Entgegenhaltungen:
**EP-A1- 2 204 671      US-A1- 2011 043 403**
**US-A1- 2011 102 233**

EP 2 718 740 B1

## EP 2 718 740 B1

**Beschreibung**

Die Erfindung betrifft ein Verfahren und eine Vorrichtung zur Erweiterung der Ausleuchtung eines Prüfobjekts mit einem elektromagnetischen Mikrowellensignal.

Für die Detektion von Objekten aus Nichtmetall werden Systeme mit Mikro- und Millimeterwellen entwickelt. Während Millimeterwellen in der Luft oder unter einer Umhüllung eines Prüfobjekts nicht oder nur geringfügig reflektiert werden, findet dagegen an metallenen Objekten sowie an Objekten mit einem hohen Wassergehalt, wie beispielsweise der menschlichen Haut und das menschliche Gewebe, nahezu eine totale Reflexion statt.

Aus der DE 10 2009 040 450 A1 geht ein Verfahren zur Erkennung eines verhüllten dielektrischen Objekts hervor. Dabei wird ein Mikrowellensignal mit einer bestimmten Bandbreite erzeugt und von Sendeantennen in Richtung des Prüfobjekts, beispielsweise eines menschlichen Körpers dessen Kleidung ein gesuchtes Objekt verhüllt, ausgesendet. Diese Mikrowellensignale werden am menschlichen Körper wie auch an den unter der Kleidung versteckt gehaltenen Objekten reflektiert und in mehreren zugehörigen Empfangsantennen empfangen. Die Fokussierung der empfangenen Mikrowellenstrahlung auf die dreidimensionale Kontur des Prüfobjekts wird durch eine synthetische Fokussierung, z.B. sendeseitig durch einen Digital-Beam-Forming-Algorithmus und/oder durch eine empfangsseitige Fokussierung durch Messen des Betrags und der Phase der reflektierten Millimeterwellen, erreicht.

Die US 2011/0043403 A1 beschreibt eine Apparatur zum Abbilden eines Objekts mit Hilfe von elektromagnetischer Strahlung. Damit ein Objekt möglichst vollständig abgetastet werden kann, wird ein Hohlspiegel mit parabolischer oder hyperbolischer Oberfläche verwendet, wobei die Antennenanordnung im ersten Brennpunkt bzw. Brennlinie dieses Spiegels angeordnet ist. Die Antennenanordnung strahlt dann die elektromagnetischen Strahlen auf den Spiegel ab, durch den diese wiederum in einem zweiten Brennpunkt bzw. Brennlinie fokussiert werden, in dem das zu untersuchende Prüfobjekt positioniert ist. Die Antennen selbst sind dabei drehbar angeordnet, sodass sich der zweite Brennpunkt bzw. Brennlinie verschiebt, wodurch die der Apparatur zugewandte Seite des Prüfobjekts vollständig abgetastet werden kann.

Die EP 2 204 671 A1 lehrt einen Reflektor, welcher eben ist. Dort ist aber keine synthetische Fokussierung vorhanden. Vielmehr wird der Reflektor eingesetzt, um einen zweiten von dem ersten sich unterscheidenden Blickwinkel eines Zielobjekts zu erhalten. Diese Blickwinkel werden dann hintereinander aneinandergefügt.

Ein weiteres bildgebendes System mit Millimeterwellen ist aus der US 2011/0102233 A1 bekannt.

Eine Abbildung solcher stark reflektierender Objekte weist bei einer Bestrahlung mit Mikrowellenstrahlung im Nahbereich eine reduzierte Ausleuchtung der Randbereiche durch die starke Reflexion der Strahlung an einer glatten Oberfläche auf. Der auf einer Abbildung sichtbare Bereich eines Prüfobjekts ist somit eingeschränkt. Dies wird herkömmlicherweise durch eine Vergrößerung der Sende-/Empfangs-Apertur, also eine Vergrößerung der Fläche, auf der die Sende- und Empfangsantennen angeordnet sind, erreicht. Solch eine großflächige Antennenanordnung ist jedoch mit hohen Kosten verbunden und ermöglicht nur eine begrenzte Ausweitung des sichtbaren und ausgeleuchteten Bereichs des Prüfobjekts.

Es ist daher die Aufgabe der Erfindung ein Verfahren sowie eine Vorrichtung zu schaffen, das bzw. die eine signifikante Erweiterung der Ausleuchtung eines Prüfobjekts ohne kostspielige Vergrößerung der Sende-/Empfangs-Anlage ermöglicht und somit kostengünstig ist.

Die Aufgabe wird durch das Verfahren gemäß Anspruch 1 und die Vorrichtung gemäß Anspruch 10 gelöst. In den Unteransprüchen sind vorteilhafte Weiterbildungen des erfindungsgemäßen Verfahren bzw. der erfindungsgemäßen Vorrichtung dargestellt.

Bei dem erfindungsgemäßen Verfahren zur Erweiterung der Ausleuchtung eines Prüfobjekts wird ein Prüfobjekt mit einem elektromagnetischen Mikrowellensignal, das von einer Sendeantenne abgestrahlt wird, beleuchtet. Das vom Prüfobjekt reflektierte Mikrowellensignal wird von mindestens einer Empfangsantenne empfangen. Durch synthetische Fokussierung des reflektierten Mikrowellensignals wird eine Abbildung des Prüfobjekts rekonstruiert. Erfindungsgemäß wird mindestens ein Reflektorelement zum Prüfobjekt hin ausgerichtet angeordnet.

Die vom Reflektorelement und vom Prüfobjekt reflektierten Mikrowellensignale werden in jeder Empfangsantenne empfangen und zur Rekonstruktion der Abbildung des Prüfobjekts zusätzlich zu den Mikrowellenstrahlen, die von einer Sendeantenne ohne Reflexion an dem Reflektorelement auf das Prüfobjekt treffen und ohne Reflexion an dem Reflektorelement von der Empfangsantenne empfangen werden, verwendet.

Ein Reflektorelement, das beispielsweise als metallische Anordnung ausgebildet ist oder eine metallisierte Oberfläche aufweist, an dem die Mikrowellensignale stark reflektiert werden, ist kostengünstig erhältlich und kann einfach und gegebenenfalls variabel zum Prüfobjekt hin ausgerichtet werden. Durch das Reflektorelement wird ein erheblich größerer Anteil der abgestrahlten Signale für die Rekonstruktion genutzt.

Weiterhin ist es vorteilhaft, wenn zur synthetischen Fokussierung diejenigen Mikrowellensignale verwendet werden, die von einer Sendeantenne abgestrahlt werden, dann von dem Reflektorelement auf das Prüfobjekt reflektiert und vom Prüfobjekt zu einer Empfangsantenne reflektiert werden, und/oder diejenigen Mikrowellensignale verwendet werden, die von einer Sendeantenne abgestrahlt, vom Prüfobjekt in Richtung auf das Reflektorelement reflektiert und vom Reflektorelement zu einem Empfangsantenne reflektiert werden, und/oder diejenigen Mikrowellensignale verwendet

2

werden, die von einem Sendeantenne abgestrahlt, dann von einem Reflektorelement auf das Prüfobjekt reflektiert, vom Prüfobjekt zum Reflektorelement reflektiert und von dort zu einem Empfangsantenne reflektiert werden.

Somit werden alle Signale, die bis dreimal auf ihrem Weg zum Empfangsantenne reflektiert werden, zur synthetischen Fokussierung und somit zur Rekonstruktion einer Abbildung des Prüfobjekts verwendet. Vorteilhaft ist dabei insbesondere, dass der dazugewonnene Anteil der empfangen Signale Information zu vorher nicht beleuchteten Oberflächenbereichen des Prüfobjekts liefert und eine Abbildung dieser Oberflächenbereich somit rekonstruierbar wird.

Vorteilhaft ist es ebenfalls, wenn eine virtuelle Position der Sendeantenne durch Spiegelung der realen Position des Sendeantenne an dem Reflektorelement ermittelt wird und eine virtuelle Position der Empfangsantenne durch Spiegelung der realen Position der Empfangsantenne an dem Reflektorelement ermittelt wird. Eine solche virtuelle Position der Sende- bzw. Empfangsantenne vereinfacht einen Algorithmus zur synthetischen Fokussierung der Signale erheblich. Der Term zur Berechnung der Abbildung kann unverändert beibehalten werden, lediglich die Anzahl und Position der Sende- bzw. Empfangsantennen wird erweitert.

Von Vorteil ist es ebenfalls, wenn lediglich die an der mindestens einen Empfangsantenne empfangenen Mikrowellensignale, die in einem ersten Zeitfenster empfangen werden, dessen Grenzen durch die minimale bzw. maximale Laufzeit eines Mikrowellensignals gebildet werden, das von einer virtuellen Sendeantenne über das Prüfobjekt zu einer realen Empfangsantenne bzw. von einer realen Sendeantenne über das Prüfobjekt zu einer virtuellen Empfangsantenne reflektiert wird, bei der synthetischen Fokussierung jeweils einer virtuellen Sendeantenne und einer realen Empfangsantenne bzw. jeweils einer realen Sendeantenne und einer virtuellen Empfangsantenne zugeordnet wird. Dadurch wird eine Vorauswahl der empfangenen Mikrowellensignale getroffen, die von einem virtuellen Sendeantenne bzw. einem virtuellen Empfangsantenne ausgesandt bzw. empfangen werden können. Somit verkürzt sich die Rechenzeit zur Auswertung der empfangenen Mikrowellensingale und reduziert das Auftreten von Artefakten oder Störkomponenten in der Abbildung.

Vorteilhafterweise werden die an den Empfangsantennen empfangenen Mikrowellensignale, die in einem zweiten Zeitfenster empfangen werden, bei der synthetischen Fokussierung einer realen Sendeantenne bzw. einer realen Empfangsantenne zugeordnet, wobei die Grenzen des zweiten Zeitfensters durch die minimale bzw. maximale Laufzeit eines Mikrowellensignals gebildet werden, das von einem realen Sendeantenne über ein am Reflektorelement gespiegeltes virtuelles Prüfobjekt zu einer realen Empfangsantenne reflektiert wird. Durch diese Vorauswahl der empfangenen Mikrowellensignale, die von einem gespiegelten virtuellen Prüfobjekt reflektiert werden, wird ebenfalls die Rechenzeit zur synthetischen Fokussierung verkürzt und Artefakte in der Abbildung werden vermieden.

Vorteilhaft ist es auch, wenn die ermittelte Position des virtuellen Prüfobjekts durch Spiegelung an dem Reflektorelement einer realen Position des Prüfobjekts zugeordnet wird. Durch diese einfache Operation wird ein weiterer Bereich des Prüfobjekts in seiner realen Position ermittelt. Durch Abbildungen, die aus den Mikrowellensignalen im ersten und im zweiten Zeitfenster ermittelt wurden, wird ein deutlich erweiterter Bereich des Prüfobjekts darstellt. Somit werden durch die Verwendung der am Reflektorelement reflektierten Mikrowellensignale versteckte Gegenstände in einem vorher nicht abgebildeten Bereich des Prüfobjekts aufspürbar.

Es ist weiterhin vorteilhaft, wenn die Mikrowellensignale, die im ersten und zweiten Zeitfenster empfangen werden, mit einem Gewichtsfaktor beaufschlagt werden, die die Abschwächung des Mikrowellensignals bei Reflexion an dem Reflektorelement und die Abschwächung des Mikrowellensignals durch eine Laufzeiterhöhung in Luft ausgleicht. Damit wird die Abbildung des Prüfobjekts durch das Reflektorelement in seiner Darstellung, z.B. seiner Helligkeit, der Abbildung des Prüfobjekts durch die nicht am Reflektorelement gespiegelten Mikrowellensignale angepasst.

Vorteilhafterweise werden mehrere Reflektorelemente zum Prüfobjekt hin ausgerichtet positioniert und die von jeweils von einem Reflektorelement und vom Prüfobjekt reflektierten und/oder die über mehrere Reflektorelemente und vom Prüferobjekt reflektierten Mikrowellensingale in einer Empfangsantenne empfangen und zur Rekonstruktion der Abbildung des Prüfobjekts verwendet. Beispielsweise kann ein erstes Reflektorelement seitlich zum Prüfobjekt ausgerichtet positioniert werden und ein zweites Reflektorelement oberhalb des Prüfobjekts positioniert werden, sodass unterschiedliche Oberflächenbereiche des Prüfobjekts durch unterschiedliche Reflektorelemente ausgeleuchtet und die reflektierten Mikrowellensignale zur Rekonstruktion der Abbildung dienen können. Damit kann eine Abbildung des Prüfobjekts mit einer einzigen Messung gleichzeitig um mehrere Bereiche erweitert werden.

Dabei ist vorteilhaft, wenn mehrere Reflektorelemente in jeweils unterschiedlichem Abstand zum Prüfobjekt angeordnet werden, sodass sich die Laufzeit der jeweils zur Rekonstruktion der Abbildung verwendbaren und von verschiedenen Reflektorelementen reflektierten Mikrowellensignale nicht überschneiden. Dies ermöglicht eine Vorauswahl der empfangenen Mikrowellensignale in ein Zeitfenster entsprechend der vorher beschriebenen Vorgehensweisen.

Ebenso ist es vorteilhaft, wenn das Reflektorelement mindestens drei voneinander getrennte Bereiche umfasst, die jeweils eine diffus reflektierende Oberfläche aufweisen und aus der Mikrowellenstrahlung, die von diesen Bereichen reflektiert wird, die Lage und Entfernung des Reflektorelements ermittelt wird. Somit kann die Lage und Entfernung des Reflektorelements durch den gleichen Algorithmus, der zur Rekonstruktion einer Abbildung des Prüfobjekts verwendet wird, ermittelt werden und somit die Anordnung kalibriert werden. Wird das Reflektorelement beispielsweise zwischen zwei Messungen verschoben, so kann die neue Lage und Entfernung des Reflektorelements automatisch ermittelt und in der Berechnung zur synthetischen Fokussierung eingesetzt werden.

Eine erfindungsgemäße Vorrichtung zur Erweiterung der Ausleuchtung eines Prüfobjekts entsprechend dem obengenannten Verfahren umfasst mindestens eine Sendeantenne, die ein elektromagnetisches Mikrowellensignal in Richtung auf ein Prüfobjekt abstrahlt, mindestens eine Empfangsantenne, die das vom Prüfobjekt reflektierte Mikrowellensignal empfängt und eine Bearbeitungseinheit, die aus dem reflektierten Mikrowellensignal durch synthetische Fokussierung eine Abbildung des Prüfobjekts rekonstruiert. Erfindungsgemäß ist mindestens ein Reflektorelement zum Prüfobjekt hin ausgerichtet angeordnet.

Vorteilhaft ist es, wenn die Position des Reflektorelements veränderbar ist. Dadurch können beispielsweise aufeinanderfolgende Messungen mit unterschiedlicher Position des Reflektorelements durchgeführt werden und somit bei jeder Messung unterschiedliche Bereiche der Oberfläche des Prüfobjekts ausgeleuchtet und dargestellt werden.

In gleicher Weise vorteilhaft ist es, wenn mehrere Reflektorelemente zum Prüfobjekt ausgerichtet angeordnet sind. Insbesondere werden die mehreren Reflektorelemente an unterschiedlichen Seiten zum Prüfobjekt hin ausgerichtet positioniert und erlauben somit unterschiedliche Perspektiven auf das Prüfobjekt und deren Abbildung bei einer einzigen Strahlung.

Vorteilhaft ist es, wenn die mindestens eine Sendeantenne und mindestens eine Empfangsantenne als aktives multistatisches Antennenarray ausgebildet sind. Dabei wird das von mindestens einer Sendeantenne abgestrahlte Mikrowellensignal von mindestens einer Empfangsantenne empfangen und der Betrag und die Phasenlage des empfangenen Signals detektiert. Die Sende- und Empfangsantenne sind dabei an räumlich verschiedenen Positionen angeordnet.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:

Fig. 1    eine Anordnung von Sendeantennen und Empfangsantennen, die für das erfindungsgemäße Verfahren bzw. die erfindungsgemäße Vorrichtung verwendet werden kann, in Draufsicht;

Fig. 2    ein erstes Ausführungsbeispiel einer erfindungsgemäßen Vorrichtung mit einem Mikrowellensignal entsprechend einer nullten Gruppe von Mikrowellensignalen, die ohne Reflexion am Reflektorelement empfangen werden in schematischer Darstellung;

Fig. 3    das erste Ausführungsbeispiel einer erfindungsgemäßen Vorrichtung gemäß Fig. 2 mit einem Mikrowellensignal entsprechend einer ersten Gruppe von Mikrowellensignalen in schematischer Darstellung;

Fig. 4    das erste Ausführungsbeispiel gemäß Fig. 2 mit einem Mikrowellensignal entsprechend einer zweiten Gruppe von Mikrowellensignalen in schematischer Darstellung;

Fig. 5    das erste Ausführungsbeispiel gemäß Fig. 2 mit einem Mikrowellensignal entsprechend einer dritten Gruppe von Mikrowellensignalen in schematischer Darstellung;

Fig. 6    ein erfindungsgemäßes Beispiel eines Empfangssignals unterteilt in Zeitfenster in schematischer Darstellung;

Fig. 7    ein erfindungsgemäßes Ausführungsbeispiel einer Vorrichtung gemäß Fig. 2 mit einem Prüfobjekt mit erweiterten Abbildungsbereichen in schematischer Darstellung;

Fig. 8    ein zweites Ausführungsbeispiel einer erfindungsgemäßen Vorrichtung mit zwei Reflektorelementen in schematischer Darstellung;

Fig. 9    ein erstes Ausführungsbeispiel eines erfindungsgemäßen Reflektorelements in Seitenansicht;

Fig. 10    ein zweites Ausführungsbeispiel eines erfindungsgemäßen Reflektorelements in perspektivischer Ansicht;

Fig. 11    ein Ablaufdiagramm des erfindungsgemäßen Verfahrens und

Fig. 12    eine beispielhafte Abbildung eines menschlichen Körpers gemäß dem erfindungsgemäßen Verfahren.

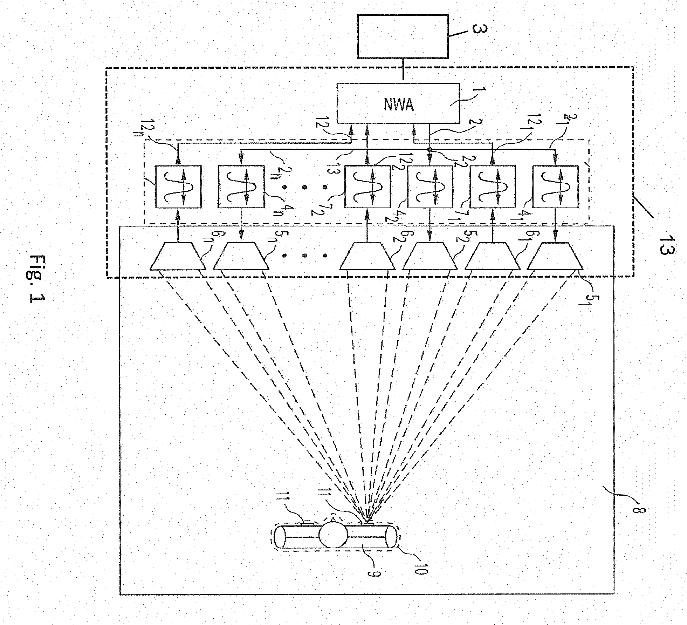

In Fig. 1 ist eine beispielhafte Anordnung von Sendeantenne $5_1$, $5_2$, .. $5_n$ und Empfangsantennen $6_1$, $6_2$, ..$6_n$ in einem zweidimensionalen Antennenarray 13 dargestellt, die zur Ausleuchtung eines Messobjekts 9 mit Mikrowellensignalen verwendbar ist. Das in einem Netzwerkanalysator 1 erzeugte Mikrowellensignal wird über die Verbindungsleitung 2 einem nichtdargestellten Signalteiler zugeführt, der das Mikrowellensignal in identische Teil-Mikrowellensignale aufteilt und über jeweils eine Verbindungsleitung $2_1$, $2_2$.., $2_n$ zu einer zum jeweiligen Mikrowellensignal gehörigen Sendeseitigen Fokussier-Untereinheit $4_1$, $4_2$,..$4_n$ der Fokussier-Einheit 3 zuleitet. In den einzelnen sendeseitigen Fokussier-Untereinheiten $4_1$, $4_2$,..$4_n$ wird das jeweilige Teil-Mikrowellensignal softwaremäßig, beispielsweise mit einem Digital-Beam-Forming-Algorithmus so weit aufbereitet, dass das jeweilige Teil-Mikrowellensignal durch Vorhalten entsprechender Phasenverschiebungen an der Fokussiereinrichtung 3 sich anschließenden Sendeantennen $5_1$, $5_2$,.. $5_n$, beispielsweise in Horn-Antennen, auf den jeweils abzutastenden Raumpunkt fokussiert wird. Die auf ein Prüfobjekt 9, beispielsweise einen menschlichen Körper, projizierten Teil-Mikrowellensignale werden am Prüfobjekt 9 wie auch an den innerhalb der gestrichelt angedeuteten Kleidung 10 versteckt gehaltenen verborgenen Objekten 11 reflektiert.

Die jeweils reflektierten Mikrowellensignale werden in zugehörigen Empfangsantennen $6_1$, $6_2$, ..$6_n$ empfangen und nachfolgenden empfangsseitigen Fokussier-Untereinheiten $7_1$, $7_2$, ..$7_n$ der Fokussierungseinrichtung 3 zugeführt. Über die Verbindungsleitung $12_1$, $12_2$, ..$12_n$ werden die empfangenen Teil-Mikrowellensignale zu unterschiedlichen Toren eines vektoriellen Mehrtor-Analysators 1 zugeführt. Dort werden die Beträge und die Phasen der einzelnen Teil-Mikrowellensignale entsprechend der jeweiligen Entfernung des zu fokussierenden Raumpunkts zum jeweiligen Empfangsantenne $6_1$, $6_2$, ..$6_n$ zueinander erfasst. Anstelle von n Sendeantennen $5_1$, $5_2$, ..$5_n$ kann alternativ auch eine reduzierte Anzahl von Sendeantennen verwendet werden. Es kann auch nur eine einzige Sendeantenne ohne sendeseitige Fokussierung zum Einsatz kommen. Auch die Anzahl von Empfangsantennen $6_1$, $6_2$, ..$6_n$ kann entsprechend der gewünschten empfangsseitigen Fokussierungsqualität variiert werden. Die sendeseitige und/oder die empfangsseitige Fokussierung findet rein rechnerisch innerhalb einer Bearbeitungseinrichtung 3 statt und wird als synthetische Fokussierung bezeichnet.

Eine Fokussierung durch optische Komponenten, wie z.B. Linsen, findet nicht statt.

In der erfindungsgemäßen Vorrichtung bzw. dem erfindungsgemäßen Verfahren wird eine Antennenanordnung 14, wie das beispielhaft dargestellte Antennenarray 13, in einem bistatischen bzw. multistatischen Modus betrieben. Im bistatischen Modus sendet eine Sendeantenne ein Mikrowellensignal aus, das von einer räumlich von der Sendeantenne $5_1$, $5_2$, .. $5_n$ getrennten Empfangsantenne $6_1$, $6_2$, ..$6_n$ empfangen wird. Im multistatischen Modus senden mehrere Sendeantenne $5_1$, $5_2$, ..$5_n$ Mikrowellensignale aus, wobei das reflektierte Signal jeder einzelnen Sendeantenne von jeweils einer Mehrzahl von Empfangsantennen $6_1$, $6_2$, ..$6_n$ empfangen wird.

Die Antennenanordnung 14 arbeitet im Nahfeldbereich, d.h. die Entfernung zwischen der Antennenanordnung 14 und dem Prüfobjekt 9 ist nur ein kleines Vielfaches der Abmessungen der Antennenanordnung 14.

Zur synthetischen Fokussierung des empfangenen Mikrowellensignals kann beispielsweise ein Back-Propagation-Algorithmus entsprechend der nachfolgenden Gleichung verwendet werden:

$$R(x,y,z) = \sum_{f=1}^{n_F} \sum_{t_x=1}^{n_T} \sum_{r_x=1}^{n_R} M(f, t_x, r_x)$$
$$\cdot e^{+j\frac{2\pi}{c_0}f\left|\overrightarrow{r}_{voxel} - \overrightarrow{r}_{t_x}\right|}$$
$$\cdot e^{+j\frac{2\pi}{c_0}f\left|\overrightarrow{r}_{r_x} - \overrightarrow{r}_{voxel}\right|}.$$

Dabei bezeichnet M das empfangene Mikrowellensignal, $t_x$ und $r_x$ bezeichnen die Position einer Sendeantenne $5_1$, $5_2$, ..$5_n$ und Empfangsantenne $6_1$, $6_2$, ..$6_n$ der Antennenanordnung 14. Jedem Objektpunkt (x,y,z) im dreidimensionalen Raum wird so ein Reflektionswert R zugeordnet. Um die Genauigkeit der Daten zu erhöhen, kann eine Messung über verschiedene Frequenzen f durchgeführt werden. Der Reflexionswert R wird dann zusätzlich über alle vorhandenen Frequenzen summiert. Die vorliegende Erfindung ist jedoch nicht auf diesen Fokussierungsalgorithmus beschränkt.

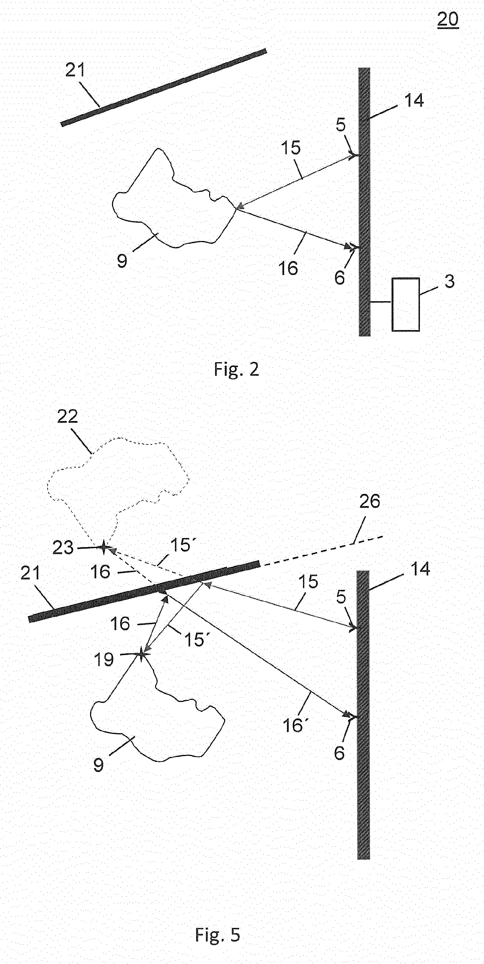

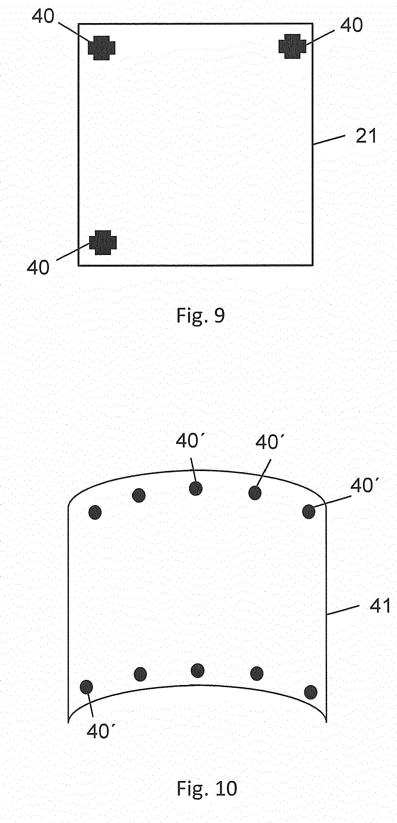

Fig. 2 zeigt ein erstes Ausführungsbeispiel einer Vorrichtung 20 zur Erweiterung der Ausleuchtung eines Prüfobjekts 9. Eine Antennenanordnung 14 mit mindestens einer Sendeantenne 5 und mindestens einer Empfangsantenne 6 ist in einer Entfernung vom Prüfobjekt 9 angeordnet, die nicht wesentlich größer als die Ausdehnungen der Antennenanordnung 14 ist. Ein Reflektorelement 21 ist nun zusätzlich zum Prüfobjekt 9 hin ausgerichtet angeordnet. Das Reflektorelement 21 weist vorzugsweise eine metallisierte Oberfläche auf, an der Mikrowellensignale totalreflektiert werden. Das Reflektorelement 21 ist als Ebene zweidimensionale Fläche ausgebildet sein. Das Reflektorelement 21 kann jedoch auch eine zylindrisch geformte Oberfläche, siehe Fig. 10, oder eine anders geformte Oberfläche aufweisen.

Das Prüfobjekt 9 wird mit einem elektromagnetischen Mikrowellensignal 15, das von einer Sendeantenne 5 der Antennenanordnung 14 ausgestrahlt wird, beleuchtet. Das vom Prüfobjekt 9 reflektierte Mikrowellensignal 16 wird von einer Empfangsantenne der Antennenanordnung 14 empfangen. Ein solches Mikrowellensignal, das ohne eine Reflektion am Reflektorelement 21 vom Prüfobjekt 9 reflektiert und von einer Empfangsantenne 6 der Antennenanordnung 14 empfangen wird, wird nachfolgend als direkt reflektiertes Mikrowellensignal 37 oder Mikrowellensignal einer nullten Gruppe bezeichnet.

Die Vorrichtung 20 umfasst weiterhin eine Verarbeitungseinrichtung 3, die mit der Antennenanordnung 14 verbunden ist. Die Verarbeitungseinheit 3 erhält von der Antennenanordnung 14 die empfangenen Mikrowellensignale und rekonstruiert daraus eine Abbildung des Prüfobjekts 9 durch die bereits beschriebene synthetische Fokussierung.

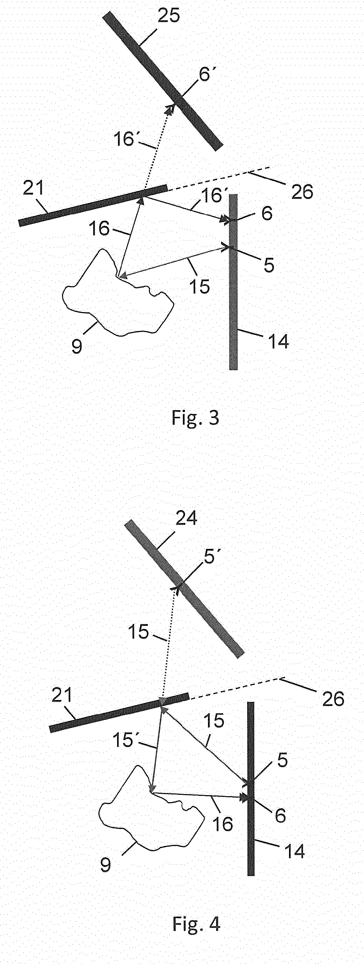

Anhand der Fig. 3-7 werden nun die Mikrowellenstrahlen und ihre Ausbreitungswege beschrieben, die durch das Reflektorelement 21 reflektiert und zur Rekonstruktion des Prüfobjekts 9 genutzt werden.

Fig. 3 stellt den Strahlenverlauf einer ersten Gruppe von Signalen 34 dar, die zur synthetischen Fokussierung des Prüfobjekts 9 verwendet werden, bei der ein von einer Sendeantenne 5 abgestrahltes Mikrowellensignal 15 vom Prüfobjekt 9 in Richtung auf das Reflektorelement 21 als Mikrowellensignal 16 reflektiert wird und weiter vom Reflektorelement 21 als Mikrowellensignal 16' von einer Empfangsantenne 6 der Antennenanordnung 14 empfangen wird. Das Signal 16 und 16' entspricht dabei einem Mikrowellensignal, das bei geradliniger Ausbreitung eine virtuelle Empfangsantenne 6' einer virtuellen Empfangsantennen-Anordnung 25 empfangen würde. Die Position der virtuellen Empfangsantenne 6' entspricht der an der Spiegelachse 26 gespiegelten reelen Position der Empfangsantenne 6.

In Fig. 4 ist beispielhaft ein Mikrowellensignal 35 einer zweiten Gruppe von Signalen dargestellt, die zur synthetischen Fokussierung des Prüfobjekts 9 verwendet werden. Dabei trifft ein von einer Sendeantenne 5 abgestrahltes Mikrowellensignal 15 zuerst auf ein Reflektorelement 21, und wird von dort als reflektiertes Mikrowellensignal 15' zum Prüfobjekt 9 hin reflektiert. Das vom Prüfobjekt 9 reflektierte Signal 16 wird von einer Empfangsantenne 6 der realen Sendeantenne- und Empfangsantennen-Anordnung 14 empfangen. Der Ausbreitungsweg des abgestrahlten Mikrowellensignals 15' entspricht bei einer geradlinigen Ausbreitung, bei der das Signal nicht vom Reflektorelement 21 reflektiert wird, dem punktiert eingezeichneten Signal 15, das von einem virtuellen Sendeantenne 5' einer virtuellen Sendeanordnung 24 ausgestrahlt wird. Die Position der virtuellen Sendeantenne 5' ergibt sich aus der Position der realen Sendeantenne 5, die an der verlängerten Spiegelachse 26 des Reflektorelements 21 gespiegelt ist.

Fig. 5 zeigt eine dritte Gruppe von Signalen 36, die durch die Anordnung des Reflektorelements 21 zusätzlich zu den direkt reflektierten Mikrowellensignalen zur synthetischen Fokussierung und damit zur Rekonstruktion einer Abbildung des Prüfobjekts 9 verwendet wird. Dabei wird das Mikrowellensignal 15 von einer Sendeantenne 5 der realen Sende- und Empfangsantennen-Anordnung 14 abgestrahlt und vom Reflektorelement 21 auf das Prüfobjekt 9 reflektiert. Das vom Prüfobjekt 9 reflektierte Signal 16 trifft wiederum auf das Reflektorelement 21 und wird dort reflektiert und als Signal 16' an der realen Empfangsantenne 6 der Antennenanordnung 14 empfangen. Der Ausbreitungsweg des ausgesandten bzw. empfangenen Signals 15, 15', 16, 16' entspricht bei einer geradlinigen Weiterführung der reflektierten Signale zu einem virtuellen Prüfobjekt 22. Der Raumpunkt 23 des virtuellen Prüfobjekts 22 entspricht dabei dem Raumpunkt 19 des realen Prüfobjekts 9, das an der Spiegelachse 26 gespiegelt wurde.

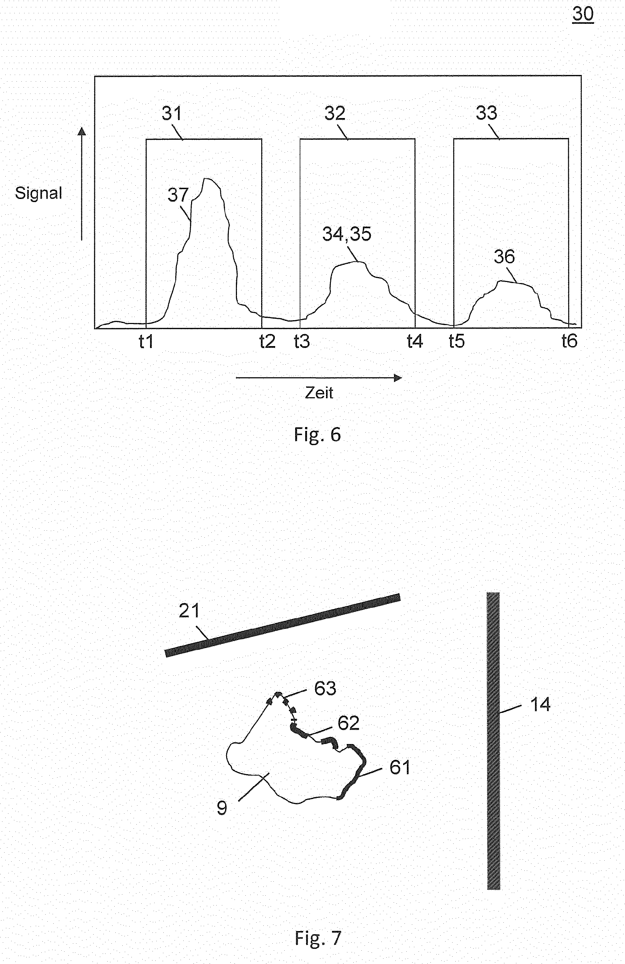

Fig. 6 zeigt die von der realen Sende- und Empfangsantennen-Anordnung 14 empfangenen Mikrowellensignale. Diese wurden, wie bereits beschrieben, in ihren Betrag und der empfangenen Phase detektiert. Durch eine Fourier-Transformation wird das Signal vom Frequenzbereich in die Zeitdomäne überführt. Das empfangene Mikrowellensignal ist somit entsprechend seiner Laufzeit dargestellt. Die direkt reflektierten Mikrowellensignale 37 haben den kürzesten Ausbreitungsweg und treffen somit in einem ersten Zeitfenster 31 an der Antennenanordnung ein. Die Mikrowellensignale der ersten und zweiten Gruppe von Mikrowellensignalen entsprechend Fig. 3 bzw. Fig. 4 legen einen längeren Ausbreitungsweg zurück und treffen somit in einem zweiten Zeitfenster 32 an der Antenneneinrichtung 14 ein. Die Grenzen $t_3$, $t_4$ des ersten Zeitfensters 32 werden durch eine minimale bzw. maximale Laufzeit eines Mikrowellensignals gebildet, das von einem virtuellen Sendeantenne der virtuellen Sendeantenne-Anordnung 24 über das Prüfobjekt 9 zu einem realen Empfangsantenne 14 bzw. von einem realen Sendeantenne 14 über das Prüfobjekt zu einem virtuellen Empfangsantenne einer virtuellen Empfangsantennen-Anordnung 25 reflektiert wird.

Die Grenzen $t_5$, $t_6$ des zweiten Zeitfensters 33 werden in ähnlicher Weise durch die minimale bzw. maximale Laufzeit eines Mikrowellensignals gebildet, das von einem realen Sendeantenne über das virtuelle Prüfobjekt 22 zu einem realen Empfangsantenne in der realen Sendeantenne- und Antennenanordnung 14 reflektiert wird, ermittelt. Die Grenzen $t_1$, $t_2$ des nullten Zeitfensters 31 werden in gleicher Weise in ein minimale bzw. maximale Laufzeit des direkt reflektierten Mikrowellensignals vom Prüfobjekt 9 ermittelt.

In der nachfolgenden synthetischen Fokussierung werden die Mikrowellensignale M(t) der nullten Gruppe 37, d.h. Mikrowellensignale des nullten Zeitfensters 31, der realen Position der Sendeantenne und der realen Empfangsantenne zugeordnet. Zur Auswertung der Mikrowellensignale M(t) der ersten Gruppe 34 und zweiten Gruppe 35, die beide im ersten Zeitfenster 32 liegen, wird die Position der realen Sendeantenne 14 und die Position der virtuellen Empfangsantenne 25 verwendet bzw. die Position der virtuellen Sendeantenne 24 und die Position der realen Empfangsantenne 14 verwendet.

Zur Auswertung der Mikrowellensignale M(t) der dritten Gruppe 36, die im zweiten Zeitfenster 33 liegen, werden die Position der realen Sendeantennen-Anordnung 14 und der realen Empangsantennnen-Anordnung 14 verwendet. Die resultierenden Abbildungspunkte entsprechen jedoch einem am Reflektorelement 21 gespiegelten virtuellen Prüfobjekt 22. Zur anschaulicheren Darstellung des Prüfobjekts wird das virtuelle Prüfobjekt 22 durch Spiegelung in eine Abbildung des realen Prüfobjekts 9 zurückgeführt und mit den Abbildungen, die aus dem Mikrowellensignalen aus dem nullten und ersten Zeitfenster 31, 32 resultieren, überlagert. Da die empfangenen Mikrowellensignale aus dem ersten und dem zweiten Zeitfenster durch Verluste aus der Reflexion am Reflektorelement und aus der längeren Laufzeit in Luft gegenüber dem direkt reflektierten Mikrowellensignal abgeschwächt sind, werden diese vorteilhafterweise durch einen Gewichtungsfaktor, der diese Abschwächung ausgleicht, gewichtet.

Fig. 7 zeigt das Prüfobjekt 9 zusammen mit der Antennenanordnung 14 und dem Reflektorelement 21. Der mit einer dicken durchgezogenen Linie gekennzeichnete Bereich 61 wird als Abbildung aus Mikrowellensignalen des nullten Zeitfensters 31 erstellt. Der mit einer gestrichelten dicken Linie markierte Bereich 62 kann nun durch die Auswertung der Mikrowellensignale des ersten Zeitfensters 32 zusätzlich zur Abbildung 61 dargestellt werden. Der fett punktiert markierte Bereich 63 wird durch die synthetische Fokussierung der Mikrowellensignale aus dem dritten Zeitfenster ermittelt. Dies zeigt sehr deutlich eine Ausweitung der Ausleuchtung und damit der abbildbaren Bereiche des Prüfobjekts 9.

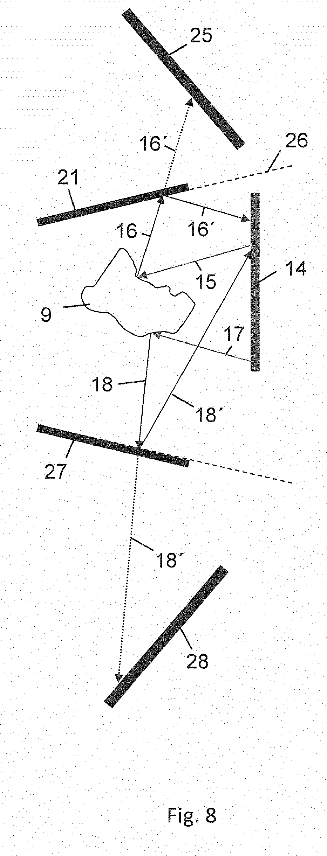

In Fig. 8 ist ein zweites Ausführungsbeispiel mit zwei Reflektorelementen 21, 27 sowie beispielhaft ein Ausbreitungspfad von zwei zur Abbildung verwendbaren Mikrowellensignale 15, 16, 16', 17, 18, 18' dargestellt. Dabei können neben den Mikrowellensignalen, die vom Prüfobjekt und vom ersten Reflektor reflektiert und an der Antennenanordnung 14 empfangen werden, auch die Signale, die vom Prüfobjekt und vom zweiten Reflektorelement 27 reflektiert und von der Antenneneinrichtung 14 empfangen werden, zur Rekonstruktion des Prüfobjekts 9 verwendet werden. Beispielhaft sind dabei die Mikrowellensignale 15, 16, 16' bzw. 17, 18, 18' sowie virtuelle Empfangsantenneanordnungen 25, 28 eingezeichnet.

Zur synthetischen Fokussierung werden dabei die Position von virtuellen gespiegelten Sendeantennen bzw. Empfangsantennen, wie im vorherigen Beispiel beschrieben, verwendet. Um die von einem weiteren Reflektorelement 27 reflektierten und an der Antennenanordnung 14 empfangenen Signale bei der synthetischen Fokussierung den Positionen der virtuellen Empfangsantenneanordnung 28 bzw. einer nicht dargestellten virtuellen Sendeantenneanordnung zuordnen zu können, sind die mehreren Spiegeleinheiten 21, 27 in jeweils unterschiedlichem Abstand vom Prüfobjekt 9 angeordnet, sodass sich die Laufzeiten der jeweils reflektierten Mikrowellensignale 15, 16, 16', 17, 18, 18' nicht überschneiden. Durch die Verwendung mehrerer Reflektoreinheiten 21, 27 können gleichzeitig mehrere Bereiche, die durch direkt reflektierte Mikrowellensignale nicht ausgeleuchtet werden, abgebildet werden.

In einem nicht dargestellten Ausführungsbeispiel wird ein bewegbares Reflektorelement verwendet. Dabei können aufeinanderfolgende Messungen des Prüfobjekts mit dem Reflektorelement, das an jeweils unterschiedlicher Position zum Prüfobjekt angeordnet ist, durchgeführt werden und somit nacheinander verschiedene Bereiche des Prüfobjekts 9 abgebildet werden.

In Fig. 9 ist eine Reflektoreinheit 21 dargestellt, die bevorzugt drei voneinander getrennte Bereiche 40 umfasst, die jeweils eine diffus reflektierende Oberfläche aufweisen. Die Bereiche 40 werden bevorzugt am Rand des Reflektorelements 21 angebracht und sind bei einer Bestrahlung mit Mikrowellensignalen durch ihre diffuse Reflektionscharakteristik erkennbar. Durch die synthetische Fokussierung wird die Position der Bereiche 40 ermittelt und kann beispielsweise zur Festsetzung der Position des Reflektorelements im Fokussierungsalgorithmus verwendet werden. Bei den Bereichen 40 kann es sich auch um Ausstanzungen oder erhabene Bereiche handeln.

Fig. 10 zeigt ein weiteres Ausführungsbeispiel eines Reflektorelements 41 mit zylindrischer Oberfläche. Dabei sind Bereiche 40' mit diffuser Reflexionscharakteristik entlang dem oberen und unteren Rand des Reflektorelements 41 angeordnet.

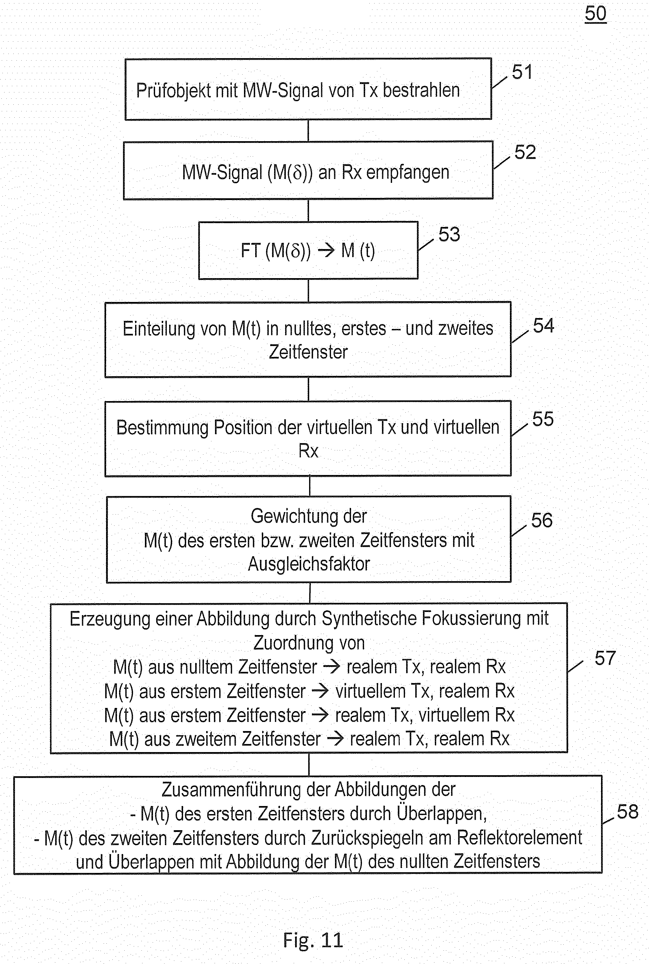

Fig. 11 zeigt ein Ablaufdiagramm des Verfahrens zur Erweiterung der Ausleuchtung eines Prüfobjekts mit Mikrowellenstrahlung. Im ersten Verfahrensschritt 51 wird ein Prüfobjekt mit einem Mikrowellensignal der Sendeantenne Tx bestrahlt. Beim Verfahrensschritt 52 werden Mikrowellensignale $M(\delta)$ an mindestens einen Empfangsantenne einer Antennenanordnung empfangen. Im nachfolgenden Verfahrensschritt 53 wird das empfangene Signal $M(\delta)$ durch eine Fourier-Transformation in die Zeitdomäne zu $M(t)$ überführt.

Im Schritt 54 werden ein nulltes, erstes und zweites Zeitfenster, beim Einsatz mehrerer Reflektorelemente auch weitere Zeitfenster, ermittelt, in denen die reflektierten Mikrowellensignale $M(t)$ entsprechend ihrem Ausbreitungspfad an der Empfangsantenne eintreffen. Die Grenzen $t_1$, $t_2$, $t_3$, $t_4$, $t_5$, $t_6$ werden dabei wie bei Fig. 6 beschrieben ermittelt.

Im nachfolgenden Verfahrensschritt 55 wird die Position der virtuellen Sendeantenne (Tx) und der virtuellen Empfangsantenne (Rx) durch Spiegelung der realen Sendeantenne und realen Empfangsantenne am Reflektorelement stimmt. Der Verfahrensschritt 55 kann auch vor Schritt 54 oder nach Schritt 56 durchgeführt werden. Optional können die Mikrowellensignale des ersten und zweiten Zeitfensters 32, 33 mit einem Ausgleichsfaktor gewichtet werden. Dies ist im Verfahrensschritt 56 angegeben.

Im nachfolgenden Schritt 57 wird eine Abbildung des Prüfobjekts durch synthetische Fokussierung der empfangenen Mikrowellensignale berechnet, wobei die Mikrowellensignale 37, die im nullten Zeitfenster 31 liegen, der Position der realen Sendeantenne und der realen Empfangsantenne zugeordnet werden. Die Mikrowellensignale 34, 35 des ersten Zeitfensters 32 werden der Position der realen Sendeantenne und der virtuellen Empfangsantenne und der Position der virtuellen Sendeantenne und der Position der realen Empfangsantenne zugeordnet. Desweiteren werden die Mikrowellensignale 36, die im zweiten Fenster 33 liegen, der Position der realen Empfangsantenne und realen Empfangsantenne zugeordnet.

Nach der synthetischen Fokussierung werden im Verfahrensschritt 58 optional die Abbildungen Mikrowellensignale des ersten Zeitfensters 32 durch Überlappen mit der Abbildung, die aus den direkt reflektierten Mikrowellensignalen des nullten Zeitfensters 31 erzeugt wurde, überlappt. Die Abbildung des Prüfobjekts, die durch die reflektierten Mikrowellensignale des zweiten Zeitfensters 33 erstellt wurde, wird durch Zurückspiegeln am Reflektorelement und anschließendes Überlappen mit der Abbildung durch die direkt reflektierten Mikrowellensignale zusammengeführt.

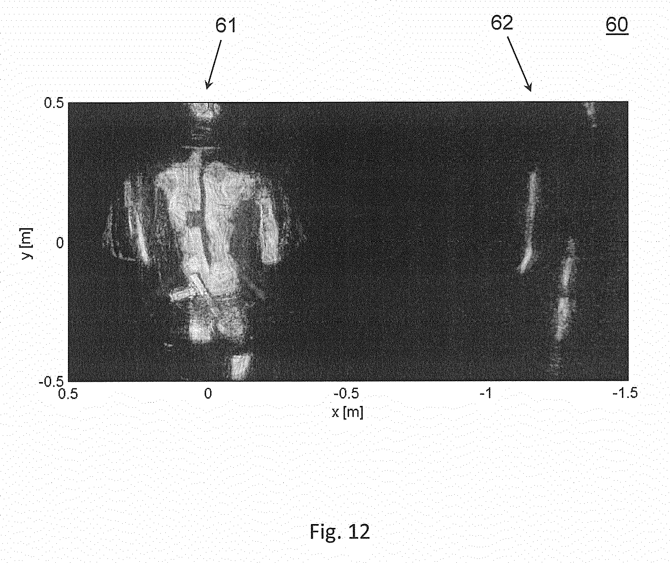

Fig. 12 zeigt eine beispielhafte Abbildung 60 eines Prüfobjekts, hier einer Messpuppe, die mit der erfindungsgemäßen Vorrichtung und gemäß dem erfindungsgemäßen Verfahren erstellt wurde. Dabei ist die links im Bild dargestellte Abbildung 61 aus den direkt reflektierten Mikrowellensignalen 37 rekonstruiert. Die auf der rechten Bildhälfte dargestellte Abbildung 62 zeigt das gleiche Prüfobjekt, wurde aber aus den Mikrowellensignalen 34, 35 des ersten Zeitfensters 32 rekonstruiert. Sie zeigt den Seitenbereich des Arms der Messpuppe, der in der Abbildung 61 nicht zu sehen ist. Die Abbildung 62 erweitert somit den sichtbaren, abbildbaren Bereich des Prüfobjekts signifikant.

Alle beschriebenen und/oder bezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Erweiterung der Ausleuchtung eines Prüfobjekts (9) bei dem
das Prüfobjekt (9) mit einem elektromagnetischen Mikrowellensignal (15, 17), das von mindestens einer Sendeantenne (5) abgestrahlt wird, beleuchtet wird und das vom Prüfobjekt (9) reflektierte Mikrowellensignal (16, 18) von mindestens einer Empfangsantenne (6) empfangen wird,
**dadurch gekennzeichnet,**
**dass** aus dem reflektierten Mikrowellensignal (16, 18) durch eine rein rechnerische, synthetische Fokussierung eine Abbildung des Prüfobjekts (9) rekonstruiert wird,
wobei mindestens ein ebenes Reflektorelement (21) zum Prüfobjekt (9) ausgerichtet angeordnet wird und die vom Reflektorelement (21) und vom Prüfobjekt (9) reflektierten Mikrowellensignale in jeder Empfangsantenne (6) empfangen und zur Rekonstruktion der Abbildung des Prüfobjekts (9) zusätzlich zu den Mikrowellenstrahlen, die von einer Sendeantenne (5) ohne Reflexion an dem Reflektorelement (21) auf das Prüfobjekt (9) treffen und ohne Reflexion an dem Reflektorelement (21) von der Empfangsantenne (6) empfangen werden, verwendet werden und
**dass** eine virtuelle Position einer virtuellen Sendeantenne (5') durch Spiegelung der realen Position einer realen Sendeantenne (5) an dem Reflektorelement (21) ermittelt wird und eine virtuelle Position einer virtuellen Empfangsantenne (6') durch Spiegelung der realen Position einer realen Empfangsantenne (6) an dem Reflektorelement (21) ermittelt wird und dass erste Grenzen ($t_3$, $t_4$) eines ersten Zeitfensters (32) durch eine minimale bzw. maximale Laufzeit des Mikrowellensignals gebildet werden, das von der virtuellen Sendeantenne über das Prüfobjekt (9) zu der realen Empfangsantenne (14) und/oder von der realen Sendeantenne (14) über das Prüfobjekt zu der virtuellen Empfangsantenne reflektiert wird,
und **dass** nullte Grenzen ($t_1$, $t_2$) eines nullten Zeitfensters (31) durch eine minimale bzw. maximale Laufzeit des direkt reflektierten Mikrowellensignals vom Prüfobjekt (9) gebildet werden
wobei Abbildungen, die aus dem nullten und dem ersten Zeitfenster (31, 32) resultieren, überlagert werden.

2. Verfahren nach Anspruch 1,
**dadurch gekennzeichnet,**
**dass** diejenigen Mikrowellensignale zur synthetischen Fokussierung verwendet werden, die von einer Sendeantenne (5) abgestrahlt werden, dann von dem Reflektorelement (21) in Richtung auf das Prüfobjekt (9) reflektiert und vom Prüfobjekt (9) zu einer Empfangsantenne (6) reflektiert werden und/oder
die von einer Sendeantenne (5) abgestrahlt, vom Prüfobjekt (9) in Richtung auf das Reflektorelement (21) reflektiert und vom Reflektorelement (21) zu einer Empfangsantenne (6) reflektiert werden und/oder
die von einer Sendeantenne (5) abgestrahlt, dann von dem Reflektorelement (21) auf das Prüfobjekt reflektiert, vom Prüfobjekt (9) zum Reflektorelement (21) reflektiert und von dort zu einer Empfangsantenne (6) reflektiert werden.

3. Verfahren nach Anspruch 1 oder 2,
**dadurch gekennzeichnet,**
**dass** lediglich die an der jeweiligen realen Empfangsantenne (6) empfangenen Mikrowellensignale, die in dem ersten Zeitfenster (32) empfangen werden bei der synthetischen Fokussierung der jeweiligen virtuellen Sendeantenne (5') und der jeweiligen realen Empfangsantenne (6) bzw. der jeweiligen realen Sendeantenne (5) und der jeweiligen virtuellen Empfangsantenne (6') zugeordnet werden.

4. Verfahren nach einem der Ansprüche 1 bis 3,

**dadurch gekennzeichnet,**

**dass** die an der jeweiligen realen Empfangsantenne (6) empfangenen Mikrowellensignale, die in einem zweiten Zeitfenster (33) empfangen werden, dessen Grenzen durch die minimale bzw. maximale Laufzeit eines Signals gebildet werden, das von einer realen Sendeantenne (5) über ein am Reflektorelement (21) gespiegeltes virtuelles Prüfobjekt (22) zu einer realen Empfangsantenne (6) reflektiert wird, bei der synthetischen Fokussierung einer realen Sendeantenne (5) und einer realen Empfangsantenne (6) zugeordnet werden.

5. Verfahren nach Anspruch 4,
   **dadurch gekennzeichnet,**
   **dass** die ermittelte Position des virtuellen Prüfobjekts (22) durch Spiegelung an dem Reflektorelement (21) einer realen Position des Prüfobjekts (9) zugeordnet wird.

6. Verfahren nach einem der Ansprüche 3 bis 5,
   **dadurch gekennzeichnet,**
   **dass** die Mikrowellensignale (34, 35), die im ersten und/oder zweiten Zeitfenster (32, 33) empfangen werden, mit einem Gewichtungsfaktor beaufschlagt werden, der die Abschwächung des Mikrowellensignals bei Reflexion an dem Reflektorelement (21) und die Abschwächung des Mikrowellensignals durch eine Laufzeiterhöhung in Luft ausgleicht.

7. Verfahren nach einem der Ansprüche 1 bis 6,
   **dadurch gekennzeichnet,**
   **dass** mehrere Reflektorelemente (21, 27) zum Prüfobjekt (9) hin ausgerichtet positioniert werden und die von jeweils einem Reflektorelement (21, 27) und vom Prüfobjekt (9) reflektierten und/oder die über mehrere Reflektorelemente (21, 27) und vom Prüfobjekt (9) reflektierten Mikrowellensignale in zumindest einer Empfangsantenne (6) empfangen werden und zur Rekonstruktion der Abbildung des Prüfobjekts (9) verwendet werden.

8. Verfahren nach Anspruch 7,
   **dadurch gekennzeichnet,**
   **dass** die mehreren Reflektorelemente (21,27) in jeweils unterschiedlichem Abstand zum Prüfobjekt (9) so angeordnet werden, dass sich die Laufzeiten der jeweils zur Rekonstruktion der Abbildung verwendbaren Mikrowellensignale nicht überschneiden.

9. Verfahren nach einem der Ansprüche 1 bis 8,
   **dadurch gekennzeichnet,**
   **dass** das Reflektorelement (21, 27, 41) mehrere, insbesondere mindestens drei, voneinander getrennte Bereiche (40) umfasst, die jeweils eine diffus reflektierende Oberfläche aufweisen und aus der Mikrowellenstrahlung, die von diesen Bereichen (40) reflektiert wird, die Lage und die Entfernung des Reflektorelements (21, 27, 41) ermittelt wird.

10. Vorrichtung zur Erweiterung der Ausleuchtung eines Prüfobjekts (9) mit
    mindestens einer Sendeantenne (5), die ein elektromagnetisches Mikrowellensignal (15, 17) in Richtung auf das Prüfobjekt (9) abgestrahlt,
    mindestens einer Empfangsantenne (6), die das vom Prüfobjekt (9) reflektierte Mikrowellensignal empfängt, und einer Bearbeitungseinheit (3),
    **dadurch gekennzeichnet,**
    **dass** die Bearbeitungseinheit eingerichtet ist, um eine Abbildung des Prüfobjekts (9) durch eine rein rechnerische, synthetische Fokussierung aus dem reflektierten Mikrowellensignal (16, 18) zu rekonstruieren,
    wobei mindestens ein ebenes Reflektorelement (21) zum Prüfobjekt (9) hin ausgerichtet angeordnet ist und jede Empfangsantenne (6) ausgebildet ist, um die vom Reflektorelement (21) und vom Prüfobjekt (9) reflektierten Mikrowellensignale zu empfangen, und die Bearbeitungseinheit (3) ausgebildet ist, um zur Rekonstruktion der Abbildung des Prüfobjekts (9) die vom Reflektorelement (21) und vom Prüfobjekt (9) reflektierten Mikrowellensignale zusätzlich zu den Mikrowellenstrahlen,
    die von einer Sendeantenne (5) ohne Reflexion an dem Reflektorelement (21) auf das Prüfobjekt (9) treffen und ohne Reflexion an dem Reflektorelement (9) von der Empfangsantenne empfangen werden, zu verwenden und
    **dass** eine virtuelle Position einer virtuellen Sendeantenne (5') durch Spiegelung der realen Position einer realen Sendeantenne (5) an dem Reflektorelement (21) ermittelbar ist und eine virtuelle Position einer virtuellen Empfangsantenne (6') durch Spiegelung der realen Position einer realen Empfangsantenne (6) an dem Reflektorelement (21) ermittelbar ist
    wobei Mittel vorhanden sind, um erste Grenzen ($t_3$, $t_4$) eines ersten Zeitfensters (32) zu definieren, die durch eine minimale bzw. maximale Laufzeit des Mikrowellensignals gebildet werden, das von der virtuellen Sendeantenne über das Prüfobjekt (9) zu der realen Empfangsantenne (14) und/oder von der realen Sendeantenne (14) über das Prüfobjekt zu der virtuellen Empfangsantenne reflektiert wird,

wobei Mittel vorhanden sind, um nullte Grenzen ($t_1$, $t_2$) eines nullten Zeitfensters (31) zu definieren, die durch eine minimale bzw. maximale Laufzeit des direkt reflektierten Mikrowellensignals vom Prüfobjekt (9) gebildet sind,

wobei Mittel vorhanden sind, um Abbildungen, die aus dem nullten und dem ersten Zeitfenster (31, 32) resultieren, zu überlagern.

**11.** Vorrichtung nach Anspruch 10,

**dadurch gekennzeichnet,**

**dass** die Bearbeitungseinheit (3) diejenigen Mikrowellensingale zur synthetischen Fokussierung verwendet, die von einer Sendeantenne (5) abgestrahlt werden, dann von dem Reflektorelement (21) in Richtung auf das Prüfobjekt (9) reflektiert und vom Prüfobjekt (9) zu einer Empfangsantenne (6) reflektiert werden und/oder die von einer Sendeantenne (5) abgestrahlt, vom Prüfobjekt (9) in Richtung auf das Reflektorelement (21) reflektiert und vom Reflektorelement (21) zu einer Empfangsantenne (6) reflektiert werden und/oder

die von einer Sendeantenne (5) abgestrahlt, dann von dem Reflektorelement (21) auf das Prüfobjekt reflektiert, vom Prüfobjekt (9) zum Reflektorelement (21) reflektiert und von dort zu einer Empfangsantenne (6) reflektiert werden.

**12.** Vorrichtung nach Anspruch 10 oder 11,

**dadurch gekennzeichnet,**

**dass** die Position des Reflektorelements (21) veränderbar ist.

**13.** Vorrichtung nach einem der Ansprüche 10 bis 12,

**dadurch gekennzeichnet,**

**dass** mehrere Reflektorelemente (21, 27) zum Prüfobjekt (9) ausgerichtet angeordnet sind.

**14.** Vorrichtung nach Anspruch 13,

**dadurch gekennzeichnet,**

**dass** die mehrere Reflektorelemente (21, 27) in jeweils unterschiedlichem Abstand zum Prüfobjekt (9) positioniert sind, sodass sich die Laufzeiten der jeweils zur Rekonstruktion der Abbildung verwendbaren Mikrowellensignale nicht überschneiden.

**15.** Vorrichtung nach einem der Ansprüche 10 bis 14,

**dadurch gekennzeichnet,**

**dass** das Reflektorelement mehrere, insbesondere mindestens drei, voneinander getrennte Bereiche umfasst, die jeweils eine diffus reflektierende Oberfläche aufweisen, und

**dass** die Bearbeitungseinheit (3) aus der Mikrowellenstrahlung, die von den Bereichen (40) reflektiert wird, die Lage und Entfernung des Reflektorelements (21, 27, 41) ermittelt.

**16.** Vorrichtung nach einem der Ansprüche 10 bis 15,

**dadurch gekennzeichnet,**

**dass** die mindestens eine Sendeantenne (5) und mindestens eine Empfangsantenne (6) als aktives multistatisches Array (13) ausgebildet sind.

## Claims

**1.** Method for extending the illumination of an object under investigation (9) in which

the object under investigation (9) is illuminated with an electromagnetic microwave signal (15, 17) which is radiated from at least one transmission antenna (5) and the microwave signal (16, 18) reflected from the object under investigation (9) is received by at least one reception antenna (6),

**characterised in that**

an image of the object under investigation (9) is reconstructed from the reflected microwave signal (16, 18) by purely computational synthetic focusing,

wherein at least one plane reflector element (21) is arranged oriented towards the object under investigation (9) and the microwave signals reflected from the reflector element (21) and from the object under investigation (9) are received in each reception antenna (6) and used for the reconstruction of the image of the object under investigation (9) in addition to the microwave rays from a transmission antenna (5) which strike the object under investigation (9) without reflection on the reflector element (21) and are received by the reception antenna (6) without reflection on the reflector element (21), and

**in that** a virtual position of a virtual transmission antenna (5') is determined by reflection of the real position of a real transmission antenna (5) on the reflector element (21) and a virtual position of a virtual reception antenna (6') is determined by reflection of the real position of a real reception antenna (6) on the reflector element (21), and

**in that** first limits (t3, t4) of a first time window (32) are formed by a minimum and maximum delay time of the microwave signal which is reflected from the virtual transmission antenna via the object under investigation (9) to the real reception antenna (14) and/or from the real transmission antenna (14) via the object under investigation to the virtual reception antenna, and

**in that** zero limits (t1, t2) of a zero time window (31) are formed by a minimum and maximum delay time of the directly reflected microwave signal from the object under investigation (9),

wherein images which result from the zero and the first time window (31, 32) are superimposed.

2. Method according to claim 1,
**characterised in that**
for the synthetic focusing use is made of the microwave signals which are radiated from a transmission antenna (5), then reflected from the reflector element (21) in the direction of the object under investigation (9) and reflected from the object under investigation (9) to a reception antenna (6) and/or

which are radiated from a transmission antenna (5), reflected from the object under investigation (9) in the direction of the reflector element (21) and reflected from the reflector element (21) to a reception antenna (6) and/or

which are radiated from a transmission antenna (5), then reflected from the reflector element (21) onto the object under investigation, reflected from the object under investigation (9) to the reflector element (21) and reflected from there to a reception antenna (6).

3. Method according to claim 1 or 2,
**characterised in that**
only the microwave signals received in the respective real reception antenna (6) which are received in the first time window (32) are allocated in the synthetic focusing to the respective virtual transmission antenna (5') and the respective real reception antenna (6) and to the respective real transmission antenna (5) and the respective virtual reception antenna (6').

4. Method according to one of claims 1 to 3,
**characterised in that**
the microwave signals received in the respective real reception antenna (6) which are received in a second time window (33) the limits of which are formed by the minimum and maximum delay time of a signal which is reflected from a real transmission antenna (5) via a virtual object under investigation (22) reflected on the reflector element (21) are allocated in the synthetic focusing to a real transmission antenna (5) and a real reception antenna (6).

5. Method according to claim 4,
**characterised in that**
the determined position of the virtual object under investigation (22) is allocated to a real position of the object under investigation (9) by reflection on the reflector element (21).

6. Method according to one of claims 3 to 5,
**characterised in that**
the microwave signals (34, 35) which are received in the first and/or second time window (32, 33) are given a weighting factor which compensates for the attenuation of the microwave signal when reflected on the reflector element (21) and for the attenuation of the microwave signal by an increase in the delay time in air.

7. Method according to one of claims 1 to 6,
**characterised in that**
a plurality of reflector elements (21, 27) are positioned oriented towards the object under investigation (9) and the microwave signals reflected from in each case a reflector element (21, 27) and from the object under investigation (9) and/or the microwave signals reflected via a plurality of reflector elements (21, 27) and from the object under investigation (9) are received in at least one reception antenna (6) and used for reconstruction of the image of the object under investigation (9).

8. Method according to claim 7,

**characterised in that**
the plurality of reflector elements (21, 27) are each arranged at a different distance from the object under investigation (9) so that the delay times of the microwave signals that can be used in each case for the reconstruction of the image do not overlap.

9. Method according to one of claims 1 to 8,
**characterised in that**
the reflector element (21, 27, 41) comprises a plurality of areas, in particular at least three areas (40) which are separated from one another and in each case have a diffusely reflecting surface, and the position and the distance of the reflector element (21, 27, 41) is determined from the microwave radiation which is reflected from these areas (40).

10. Device for extending the illumination of an object under investigation (9) with
at least one transmission antenna (5) which radiates an electromagnetic microwave signal (15, 17) in the direction of the object under investigation (9),
at least one reception antenna (6) which receives the microwave signal reflected from the object under investigation (9),
and a processing unit (3),
**characterised in that**
the processing unit is set up to reconstruct an image of the object under investigation (9) by purely computational synthetic focusing from the reflected microwave signal (16, 18),
wherein at least one plane reflector element (21) is arranged oriented towards the object under investigation (9) and each reception antenna (6) is configured to receive the microwave signals reflected from the reflector element (21) and from the object under investigation (9), and the processing unit (3) is configured to reconstruct the image of the object under investigation (9) using the microwave signals which are reflected from the reflector element (21) and from the object under investigation (9) in addition to the microwave rays from a transmission antenna (5) which strike the object under investigation (9) without reflection on the reflector element (21) and are received by the reception antenna without reflection on the reflector element (21), and
**in that** a virtual position of a virtual transmission antenna (5') can be determined by reflection of the real position of a real transmission antenna (5) on the reflector element (21) and a virtual position of a virtual reception antenna (6') can be determined by reflection of the real position of a real reception antenna (6) on the reflector element (21), wherein means are present to define first limits (t3, t4) of a first time window (32) which are formed by a minimum and maximum delay time of the microwave signal which is reflected from the virtual transmission antenna via the object under investigation (9) to the real reception antenna (14) and/or from the real transmission antenna (14) via the object under investigation to the virtual reception antenna, wherein means are present to define zero limits (t1, t2) of a zero time window (31) which are formed by a minimum and maximum delay time of the directly reflected microwave signal from the object under investigation (9),
wherein means are present to superimpose images which result from the zero and the first time window (31, 32).

11. Device according to claim 10,
**characterised in that**
for the synthetic focusing the processing unit (3) uses the microwave signals which are radiated from a transmission antenna (5), then reflected from the reflector element (21) in the direction of the object under investigation (9) and reflected from the object under investigation (9) to a reception antenna (6) and/or
which are radiated from a transmission antenna (5), reflected from the object under investigation (9) in the direction of the reflector element (21) and reflected from the reflector element (21) to a reception antenna (6) and/or
which are radiated from a transmission antenna (5), then reflected from the reflector element (21) onto the object under investigation, reflected from the object under investigation (9) to the reflector element (21) and reflected from there to a reception antenna (6).

12. Device according to claim 10 or 11,
**characterised in that**
the position of the reflector element (21) can be changed.

13. Device according to one of claims 10 to 12,
**characterised in that**
a plurality of reflector elements (21, 27) are arranged oriented towards the object under investigation (9).

**14.** Device according to claim 13,
**characterised in that**
the plurality of reflector elements (21, 27) are each positioned at a different distance from the object under investigation (9) so that the delay times of the particular microwave signals that can be used for the reconstruction of the image do not overlap.

**15.** Device according to one of claims 10 to 14,
**characterised in that**
the reflector element comprises a plurality of areas, in particular at least three areas, which are separated from one another and which in each case have a diffusely reflecting surface, and
**in that** the processing unit (3) determines the position and the range/distance of the reflector element (21, 27, 41) from the microwave rays which are reflected from the areas (40).

**16.** Device according to one of claims 10 to 15,
**characterised in that**
the at least one transmission antenna (5) and the at least one reception antenna (6) are embodied in the form of an active multi-static array (13).


**Revendications**

**1.** Procédé d'élargissement de l'irradiation d'un objet à contrôler (9), d'après lequel
l'objet à contrôler (9) est irradié avec un signal électromagnétique de micro-ondes (15, 17), qui est émis ou rayonné par au moins une antenne d'émission (5), et le signal de micro-ondes (16, 18) réfléchi par l'objet à contrôler (9) est reçu par au moins une antenne de réception (6),
**caractérisé**
**en ce qu'**à partir du signal de micro-ondes réfléchi (16, 18), on reconstruit une image de l'objet à contrôler (9), par une focalisation synthétique purement mathématique, au moins un élément de réflecteur plan (21) est agencé de manière à être orienté vers l'objet à contrôler (9) et les signaux de micro-ondes réfléchis par l'élément de réflecteur (21) et l'objet à contrôler (9) sont reçus dans chaque antenne de réception (6), et sont utilisés pour la reconstruction de l'image de l'objet à contrôler (9) en supplément aux rayons de micro-ondes qui, en provenance d'une antenne d'émission (5), tombent sur l'objet à contrôler (9) sans réflexion sur l'élément de réflecteur (21), et qui sont reçus par l'antenne de réception (6), sans réflexion sur l'élément de réflecteur (21), et
**en ce que** l'on détermine une position virtuelle d'une antenne d'émission virtuelle (5') par réflexion spéculaire sur l'élément de réflecteur (21) de la position réelle d'une antenne d'émission réelle (5), et une position virtuelle d'une antenne de réception virtuelle (6') par réflexion spéculaire sur l'élément de réflecteur (21) de la position réelle d'une antenne de réception réelle (6), et
**en ce que** des premières limites ($t_3$, $t_4$) d'une première fenêtre de temps (32) sont formées par une durée de parcours minimale et respectivement maximale du signal de micro-ondes, qui est réfléchi par l'antenne d'émission virtuelle, par l'intermédiaire de l'objet à contrôler (9), vers l'antenne de réception réelle (14), et/ou de l'antenne d'émission réelle (14), par l'intermédiaire de l'objet à contrôler, vers l'antenne de réception virtuelle,
et **en ce que** des limites d'étalonnage à zéro (t1, t2) d'une fenêtre de temps d'étalonnage à zéro (31) sont formées par une durée de parcours minimale et respectivement maximale du signal de micro-ondes directement réfléchi par l'objet à contrôler (9),
et on superpose des images, qui résultent de la première fenêtre de temps et de celle d'étalonnage à zéro (31, 32).

**2.** Procédé selon la revendication 1,
**caractérisé**
**en ce que** l'on utilise pour la focalisation synthétique, les signaux de micro-ondes, qui sont émis par une antenne d'émission (5), puis sont réfléchis par l'élément de réflecteur (21) en direction de l'objet à contrôler (9), et de l'objet à contrôler (9) vers une antenne de réception (6), et/ou
qui sont émis par une antenne d'émission (5), réfléchis par l'objet à contrôler (9) en direction de l'élément de réflecteur (21) et réfléchis par l'élément de réflecteur (21) vers une antenne de réception (6), et/ou qui sont émis par une antenne d'émission (5), puis sont réfléchis par l'élément de réflecteur (21) sur l'objet à contrôler, réfléchis de l'objet à contrôler (9) vers l'élément de réflecteur (21), et de là sont réfléchis vers une antenne de réception (6).

**3.** Procédé selon la revendication 1 ou la revendication 2,
**caractérisé**

**en ce que** lors de la focalisation synthétique, seuls les signaux de micro-ondes reçus au niveau de l'antenne de réception réelle (6) respective, qui sont reçus dans la première fenêtre de temps (32), sont associés à l'antenne d'émission virtuelle (5') respective et à l'antenne de réception réelle (6) respective, ou respectivement à l'antenne d'émission réelle (5) respective et à l'antenne de réception virtuelle (6') respective.

4.  Procédé selon l'une des revendications 1 à 3,
    **caractérisé**
    **en ce que** les signaux reçus au niveau de l'antenne de réception réelle (6) respective, qui sont reçus dans une deuxième fenêtre de temps (33) dont les limites sont formées par une durée de parcours minimale et respectivement maximale d'un signal qui est réfléchi à partir d'une antenne d'émission réelle (5) vers une antenne de réception réelle (6) par l'intermédiaire d'un objet à contrôler virtuel (22) obtenu par réflexion spéculaire sur l'élément de réflecteur (21), sont associés lors de la focalisation synthétique, à une antenne d'émission réelle (5) et à une antenne de réception réelle (6).

5.  Procédé selon la revendication 4,
    **caractérisé**
    **en ce que** la position déterminée de l'objet à contrôler virtuel (22) par réflexion spéculaire sur l'élément de réflecteur (21), est associée à une position réelle de l'objet à contrôler (9).

6.  Procédé selon l'une des revendications 3 à 5,
    **caractérisé**
    **en ce que** l'on affecte aux signaux de micro-ondes (34, 35), qui sont reçus dans la première et/ou la deuxième fenêtre de temps (32, 33), un facteur de pondération, qui compense l'affaiblissement du signal de micro-ondes lors de la réflexion sur l'élément de réflecteur (21) et l'affaiblissement du signal de micro-ondes par une augmentation de la durée de propagation dans l'air.

7.  Procédé selon l'une des revendications 1 à 6,
    **caractérisé**
    **en ce que** l'on positionne plusieurs éléments de réflecteur (21, 27) en les orientant en direction de l'objet à contrôler (9), et les signaux de micro-ondes réfléchis respectivement par un élément de réflecteur (21, 27) et par l'objet à contrôler (9), et/ou par plusieurs éléments de réflecteur (21, 27) et par l'objet à contrôler (9), sont reçus dans au moins une antenne de réception (6), et sont utilisés pour la reconstruction de l'image de l'objet à contrôler (9).

8.  Procédé selon la revendication 7,
    **caractérisé**
    **en ce que** lesdits plusieurs éléments de réflecteur (21, 27) sont agencés à une distance respectivement différente de l'objet à contrôler (9) de façon telle, que les durées de parcours des signaux de micro-ondes pouvant être utilisés pour la reconstruction de l'image, ne se chevauchent pas.

9.  Procédé selon l'une des revendications 1 à 8,
    **caractérisé**
    **en ce que** l'élément de réflecteur (21, 27, 41) comprend plusieurs, notamment au moins trois zones (40) séparées les unes des autres, qui présentent chacune une surface à réflexion diffuse, et en ce que l'on détermine, à partir du rayonnement micro-ondes, qui est réfléchi par ces zones (40), la position et l'éloignement de l'élément de réflecteur (21, 27, 41).

10. Dispositif destiné à l'élargissement de l'irradiation d'un objet à contrôler (9), comprenant
    au moins une antenne d'émission (5), qui émet ou rayonne un signal de micro-ondes (15, 17) électromagnétique en direction de l'objet à contrôler (9),
    au moins une antenne de réception (6), qui assure la réception du signal de micro-ondes réfléchi par l'objet à contrôler (9),
    et une unité de traitement de données (3),
    **caractérisé**
    **en ce que** l'unité de traitement de données est conçue pour reconstruire, à partir du signal de micro-ondes réfléchi (16, 18), une image de l'objet à contrôler (9), par une focalisation synthétique purement mathématique,
    au moins un élément de réflecteur plan (21) est agencé de manière à être orienté vers l'objet à contrôler (9), et chaque antenne de réception (6) est conçue pour assurer la réception des signaux de micro-ondes réfléchis par l'élément de réflecteur (21) et l'objet à contrôler (9), et l'unité de traitement de données (3) est conçue pour utiliser, en vue de la reconstruction de l'image de l'objet à contrôler (9), les signaux de micro-ondes réfléchis par l'élément de réflecteur (21) et par l'objet à contrôler (9) en plus de rayons de micro-ondes qui, en provenance d'une antenne d'émission (5), tombent sur l'objet à contrôler (9) sans réflexion sur l'élément de réflecteur (21), et qui sont reçus par l'antenne de réception, sans réflexion sur l'élément de réflecteur (21), et

**en ce qu'**il est possible de déterminer une position virtuelle d'une antenne d'émission virtuelle (5') par réflexion spéculaire sur l'élément de réflecteur (21) de la position réelle d'une antenne d'émission réelle (5), et de déterminer une position virtuelle d'une antenne de réception virtuelle (6') par réflexion spéculaire sur l'élément de réflecteur (21) de la position réelle d'une antenne de réception réelle (6),

des moyens étant prévus pour définir des premières limites ($t_3$, $t_4$) d'une première fenêtre de temps (32), qui sont formées par une durée de parcours minimale et respectivement maximale du signal de micro-ondes, qui est réfléchi par l'antenne d'émission virtuelle par l'intermédiaire de l'objet à contrôler (9) vers l'antenne de réception réelle (14), et/ou de l'antenne d'émission réelle (14), par l'intermédiaire de l'objet à contrôler, vers l'antenne de réception virtuelle, des moyens étant prévus pour définir des limites d'étalonnage à zéro (t1, t2) d'une fenêtre de temps d'étalonnage à zéro (31), qui sont formées par une durée de parcours minimale et respectivement maximale du signal de micro-ondes directement réfléchi par l'objet à contrôler (9),

et des moyens étant prévus pour superposer des images, qui résultent de la première fenêtre de temps et de celle d'étalonnage à zéro (31, 32).

**11.** Dispositif selon la revendication 10,

**caractérisé**

**en ce que** l'unité de traitement de données (3) utilise pour la focalisation synthétique, les signaux de micro-ondes, qui sont émis par une antenne d'émission (5), puis sont réfléchis par l'élément de réflecteur (21) en direction de l'objet à contrôler (9), et de l'objet à contrôler (9) vers une antenne de réception (6), et/ou qui sont émis par une antenne d'émission (5), réfléchis par l'objet à contrôler (9) en direction de l'élément de réflecteur (21) et réfléchis par l'élément de réflecteur (21) vers une antenne de réception (6), et/ou qui sont émis par une antenne d'émission (5), puis sont réfléchis par l'élément de réflecteur (21) sur l'objet à contrôler (9), réfléchis de l'objet à contrôler (9) vers l'élément de réflecteur (21), et de là sont réfléchis vers une antenne de réception (6).

**12.** Dispositif selon la revendication 10 ou la revendication 11,

**caractérisé**

**en ce que** la position de l'élément de réflecteur (21) peut être modifiée.

**13.** Dispositif selon l'une des revendications 10 à 12,

**caractérisé**

**en ce que** plusieurs éléments de réflecteur (21, 27) sont agencés de manière orientée vers l'objet à contrôler (9).

**14.** Dispositif selon la revendication 13,

**caractérisé**

**en ce que** lesdits plusieurs éléments de réflecteur (21, 27) sont agencés à une distance respectivement différente de l'objet à contrôler (9) de façon telle, que les durées de parcours des signaux de micro-ondes pouvant être utilisés pour la reconstruction de l'image, ne se chevauchent pas.

**15.** Dispositif selon l'une des revendications 10 à 14,

**caractérisé**

**en ce que** l'élément de réflecteur comprend plusieurs, notamment au moins trois zones séparées les unes des autres, qui présentent chacune une surface à réflexion diffuse, et en ce que l'unité de traitement de données (3) détermine, à partir du rayonnement micro-ondes, qui est réfléchi par les zones (40), la position et l'éloignement de l'élément de réflecteur (21, 27, 41).

**16.** Dispositif selon l'une des revendications 10 à 15,

**caractérisé**

**en ce que** ladite au moins une antenne d'émission (5) et ladite au moins une antenne de réception (6) sont réalisées en tant que réseau matriciel multistatique, actif (13).

Fig. 1

Fig. 2

Fig. 5

Fig. 3

Fig. 4

Fig. 6

Fig. 7

Fig. 8

Fig. 9

Fig. 10

50

Prüfobjekt mit MW-Signal von Tx bestrahlen /51

MW-Signal (M(δ)) an Rx empfangen /52

FT (M(δ)) → M (t) /53

Einteilung von M(t) in nulltes, erstes – und zweites Zeitfenster /54

Bestimmung Position der virtuellen Tx und virtuellen Rx /55

Gewichtung der
M(t) des ersten bzw. zweiten Zeitfensters mit Ausgleichsfaktor /56

Erzeugung einer Abbildung durch Synthetische Fokussierung mit Zuordnung von
M(t) aus nulltem Zeitfenster → realem Tx, realem Rx
M(t) aus erstem Zeitfenster → virtuellem Tx, realem Rx
M(t) aus erstem Zeitfenster → realem Tx, virtuellem Rx
M(t) aus zweitem Zeitfenster → realem Tx, realem Rx
/57

Zusammenführung der Abbildungen der
- M(t) des ersten Zeitfensters durch Überlappen,
- M(t) des zweiten Zeitfensters durch Zurückspiegeln am Reflektorelement und Überlappen mit Abbildung der M(t) des nullten Zeitfensters
/58

Fig. 11

Fig. 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009040450 A1
- US 20110043403 A1
- EP 2204671 A1
- US 20110102233 A1